Europäisches Patentamt

European Patent Office

Office européen des brevets

(19)

(11) Veröffentlichungsnummer: **0 121 158**
**B1**

(12) # EUROPÄISCHE PATENTSCHRIFT

(45) Veröffentlichungstag der Patentschrift:
17.12.86

(51) Int. Cl.⁴: **B 29 C 47/90**

(21) Anmeldenummer: 84102783.2

(22) Anmeldetag: 14.03.84

(54) **Kühlvorrichtung für aus einem Folienblaskopf extrudierte Kunststoffschlauchfolien.**

(30) Priorität: 31.03.83 DE 3311932
15.09.83 DE 3333397

(43) Veröffentlichungstag der Anmeldung:
10.10.84 Patentblatt 84/41

(45) Bekanntmachung des Hinweises auf die Patenterteilung:
17.12.86 Patentblatt 86/51

(84) Benannte Vertragsstaaten:
AT CH DE FR GB IT LI

(56) Entgegenhaltungen:
DE-A-2 132 098
DE-A-2 256 942
DE-A-2 259 732
DE-B-1 504 607
DE-B-2 032 346
DE-B-2 262 190
US-A-3 507 006

(73) Patentinhaber: **Windmöller & Hölscher,**
**Münsterstrasse 48- 52, D-4540 Lengerich i.W. (DE)**

(72) Erfinder: **Upmeier, Hartmut, Dipl.- Ing.,**
**Jahnstrasse 25, D-4540 Lengerich (DE)**

(74) Vertreter: **Lorenz, Eduard, Rechtsanwälte Lorenz,**
**Eduard - Seidler, Bernhard Seidler, Margrit -**
**Gossel, Hans- K. Philipps, Ina, Dr.**
**Widenmayerstrasse 23, D-8000 München 22 (DE)**

## Beschreibung

Die Erfindung betrifft eine Kühlvorrichtung für aus einem Folienblaskopf extrudierte Kunststoffschlauchfolien mit Luftkühlung, bestehend aus im Abstand voneinander in Extrusionsrichtung hinter der Extrusionsringdüse des Folienblaskopfes im wesentlichen konzentrisch zur Achse des extrudierten Schlauches angeordneten Kühlringen mit der Schlauchwandung zugewandten Luftleitflächen, über die aus ringförmigen Düsenspalten ausgeblasene Kühlluft streicht.

Bei aus den DE-AS 20 32 346 und 22 62 190 und des DE-OS-2 132 098 bekannten Kühlvorrichtungen dieser Art bestehen die Luftleitflächen im wesentlichen aus zylindrischen Flächen mit geringer axialer Länge. Diese bekannten Kühlvorrichtungen haben sich in der Praxis gut bewährt und aufgrund einer Steigerung der Kühlleistung eine Leistungssteigerung der Blasfolienherstellungsanlagen ermöglicht. Dennoch kann bei diesen bekannten Kühlvorrichtungen die Kühlluftmenge pro Zeiteinheit nur bis zu einem Grenzwert gesteigert werden, bei dessen Überschreiten sich störend bemerkbar machende Folienvibrationen auftreten, die ein Ausmaß annehmen können, daß die Folie beschädigt wird.

Aufgabe der Erfindung ist es daher, zur Steigerung der Leistung von Blasfolienherstellungsanlagen die bekannte Kühlvorrichtung derart zu verbessern, daß trotz . eines hohen Kühlluftdurchsatzes und Steigerung der Kühlleistung die Schlauchfolie beschädigende Vibrationen vermieden und die Vibrationen insgesamt verringert werden.

Erfindungsgemäß wird diese Aufgabe dadurch gelöst, daß die Luftleitflächen im Längsschnitt der Kühlringe konvex gekrümmt sind und die Form der Saugseiten von Flugzeugtragflächen,besitzen und daß in Strömungsrichtung der Kühlluft vor den Kühlringen vorflügerförmig ausgebildete Ringe, die zusammen mit den Kühlringen die Düsenspalten bilden, derart angeordnet sind, daß bei Betrieb der Vorrichtung die Strömung der aus den Düsenspalten ausgeblasenen Kühlluft etwa parallel oder spitzwinkelig zur Laufrichtung der Schlauchfolienwandung gerichtet ist.

Bei der erfindungsgemäßen Kühlvorrichtung tritt nach der Bernoulli'schen Gleichung im Bereich der Kühlringe der Venturirohr-Effekt in der Weise ein, daß durch Ansaugen der Folienwandung die Schlauchfolie in der mit hoher Geschwindigkeit strömenden Kühlluft stabilisiert wird. Die Ausnutzung des Venturidüsen-Effekts ist bei Außenkühlvorrichtungen für aus Folienblasköpfen extrudierte Kunststoffschlauchfolien aus der DE-AS 15 04 607 und den DE-OS 22 56 942 und 22 59 732 an sich bekannt. Bei diesen bekannten Außenkühlvorrichtungen wird die Kühlluft jedoch jeweils durch ein venturidüsenförmig ausgestaltetes, die Schlauchfolie einfassendes Mantelrohr geblasen, was keine nennenswerte Steigerung der Kühlleistung unter Stabilisierung der Schlauchfolie zuläßt.

Die Ausbildung der Luftleitflächen, die im Längsschnitt die Form der Saugseiten von Flugzeugtragflächen besitzen, und die vorflügelförmige Ausgestaltung des mit dem Kühlring den Düsenspalt bildenden Ringes ermöglichen es, den tragflächenartig ausgestalteten Luftleitflächen durch den düsenförmigen Spalt eine energiereichere Strömung zuzuführen, wodurch die Saugseitengrenzschicht einen größeren Druckanstieg ohne Gefahr der Ablösung der Strömung bewältigen kann. Aufgrund des aus dem Düsenspalt austretenden Blasluftstroms wird infolge der dadurch entstehenden Injektorwirkung zusätzliche Kühlluft über den Vorflügel angesaugt.

Nach einer erfinderischen Weiterbildung sind die Rückseiten der Luftleitflächen im Abströmbereich etwa dem Abströmwirbel entsprechend bogenförmig ausgebildet, so daß sie mit den Hinterkanten der Luftleitflächen scharfkantige oder abgerundete Ringschneiden bilden. Die unter Unterdruck befindliche Luft wird bei dieser Ausgestaltung wirbelfrei in die Strömungsrichtung umgelenkt und unterstützt den von den Luftleitflächen abströmenden Kühlluftstrahl.

Die Kühlluftringe können mit den die ringförmigen Düsenspalte bildenden Ringen etagenförmig auf der Innenseite der Schlauchfolie oder auf der Außenseite der Schlauchfolie oder aber auch auf beiden Seiten angeordnet sein. Werden auf beiden Seiten der Schlauchfolie Kühlringe vorgesehen, werden diese zweckmäßigerweise in der Weise versetzt zueinander angeordnet, daß sich die Kühlringe der einen Seite etwa mittig zwischen den Kühlringen der anderen Seite befinden.

Die Länge der Kühlringe kann verhältnismäßig gering sein, wobei der Abstand der Kühlringe jeder Seite voneinander etwa dem Zweibis Dreifachen ihrer axialen Länge entspricht.

Werden aus dem Folienblaskopf Folienschläuche mit geringer Wanddicke extrudiert, ist zum Aufblasen dieser Folienschläuche unter Reckung des Schlauchfolienmantels nur ein entsprechend geringer Aufblasdruck erforderlich.

Müssen jedoch die extrudierten Folienschläuche mit einem höheren Aufblasdruck aufgeblasen werden, was beispielsweise bei dickeren Schlauchfolien der Fall ist, wirkt dieser höhere Aufblasdruck auch auf die Kühlstrecke im Bereich des Schlauchfolienhalses zurück. Dieser höhere Innendruck kann dazu führen, daß der Schlauchfolienmantel im Bereich des Schlauchfolienhalses gegen die diesen von außen her umgebenden Kühlringe angedrückt wird, so daß die aus den Düsenspalten austretende Kühlluft abgedrosselt wird und unter Umkehr ihrer Strömungsrichtung über die Rückseiten der die Düsenspalte bildenden Ringe abströmt. Wirkt also der höhere Aufblasdruck in der Weise auf den Schlauchfolienhals zurück, daß der Schlauchfolienmantel das zwischen diesem und dem umgebenden Kühlring vorhandene Kühlluftpolster durchdrückt, wird der Kühl- und Führungseffekt empfindlich gestört.

Um derartige unerwünschte Erscheinungen zu vermeiden, ist nach einer erfinderischen Weiterbildung vorgesehen, daß die konvex oder tragflügelförmig gekrümmten Kühlringe mindestens auf der Außenseite der Schlauchfolie spiegelbildlich zu einer radialen Ebene angeordnet sind und daß sich in dem radialen Spalt zwischen den Kühlringen Wandungsteile befinden die die Düsenspalte begrenzen, aus denen die Kühlringe angeblasen werden. Aus den Düsenspalten strömt die Luft nach beiden Seiten ab und es wird ein stabileres Luftpolster geschaffen, so daß der höhere Aufblasdruck zur Ausrekkung des Folienschlauches nicht in der Weise auf die Kühlluftstrecke im Bereich des Folienhalses zurückwirken kann, daß die Folie in Anlage an die Außenkühlringe unter Abdrosselung der Kühlluftzufuhr angedrückt wird.

Ein höherer Aufblasdruck wirkt sich insbesondere bei der Verwendung instabiler Kunststoffe nachteilig aus, die gleich nach dem Verlassen der Extrusionsringdüse ein ausgeprägtes Quellverhalten aufweisen. Der höhere Aufblasdruck ist insbesondere dann, wenn nur Innenkühlringe verwendet werden, bestrebt, den Schlauchfolienhals von den Innenkühlringen zu entfernen, so daß es an der schwächsten Stelle, nämlich unmittelbar oberhalb der Extrusionsringdüse, wo die Schmelze noch am wärmsten ist, zu einem luftballonartigen Aufblasen des Schlauchfolienhalses bis zum Platzen kommen kann.

In weiterer Ausgestaltung der Erfindung ist daher zwischen der Extrusionsringdüse und dem ersten Kühlring ein kegeliger Aufweitungskörper angeordnet, an dessen unterem Ende ein ringförmiger Düsenspalt zum Zuführen von Schmierluft vorgesehen ist. Dieser Aufweitungskörper übt insbesondere dann einen stabilisierenden Saugeffekt auf den Schlauchfolienhals aus, wenn er etwa tragflügelförmige Mantellinien aufweist.

Weitere vorteilhafte Ausgestaltungen der Erfindung sind in den Unteransprüchen beschrieben worden.

Bin Ausführungsbeispiel der Erfindung wird nachstehend anhand der Zeichnung näher erläutert. In dieser zeigt

Fig. 1 einen Längsschnitt durch eine Seite eines tragflächenförmigen Kühlrings mit einem vorflügelartig angeordneten, einen Ringdüsenspalt bildenden Ring,

Fig. 2 einen Längsschnitt durch die Kühlvorrichtung mit auf der Folieninnen- und -außenseite etagenförmig angeordneten Kühlringen,

Fig. 3 eine der Fig. 2 entsprechende Kühlvorrichtung in ausschnittweiser vergrößerter Darstellung, die aus Gußringen aufgebaut ist,

Fig. 4 einen Schnitt durch die Kühlvorrichtung nach Fig. 3 längs der Linie IV - IV,

Fig. 5 einen der Fig. 2 entsprechenden Längsschnitt durch eine Kühlvorrichtung anderer Ausführungsform,

Fig. 6 einen vergrößerten Ausschnitt aus der Darstellung nach Fig. 5 und

Fig. 7 einen Längsschnitt durch einen aus Kühlringen aufgebauten Aufweitungskörper.

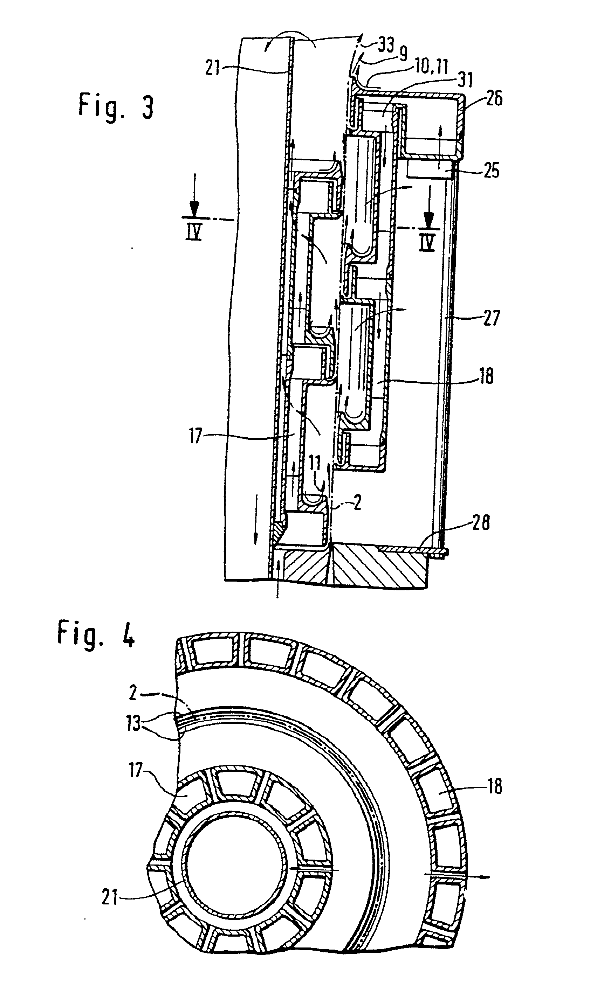

Der in Fig. 1 im teilweisen Längsschnitt dargestellte Kühlring 1 weist auf seiner der Innen- oder Außenwandung der extrudierten Schlauchfolie 2 zugewandten Seite eine in Form der Saugseite eines Flugzeugflügels konvex gekrümmte Luftleitfläche 3 auf. In Strömungsrichtung der Kühlluft vor dem Luftleitring 1 ist ein vorflügelförmiger Ring 4 angeordnet, der das vordere Ende des Luftleitrings 1 überlappt und mit diesem einen Ringspalt 5 bildet, der in Anströmrichtung der tragflügelförmig ausgebildeten Luftleitfläche des Kühlrings 1 weist und damit im spitzen Winkel zur Folienwandung 2 steht. Der kühlende Bereich des Kühlrings 1 mit dem vorflügelartigen Ring 2 ist durch die strichpunktierte Begrenzungslinie 6 kenntlich gemacht und entspricht im wesentlichen in seiner Ausgestaltung der Oberfläche eines Flugzeugtragflügels mit Junkers-Vorflügel.

Aus dem Spalt 5 zwischen dem vorflügelförmigen Ring 4 und dem Luftleitring 1 wird der Hauptluftstrom ausgeblasen, wobei dieser aufgrund der durch seine hohe Geschwindigkeit erzeugten Saugwirkung stabilisierend auf die zu kühlende Schlauchfolie 2 wirkt. In Bezug auf die Schlauchfolie 2 weist der Kühlring 1 mit vorflügelförmigem Ring 4 insgesamt eine ringflügelartige Ausgestaltung auf.

Durch den Injektoreffekt des Luftstrahls 7 wird über den vorflügelförmigen Ring 4 ein Zusatzluftstrom 8 angesaugt, der die Kühlung und Luftführung unterstützt.

Nach dem zugrundegelegten Tragflügelprinzip strömt am Ende der Luftleitfläche 3 die Kühlluft von dem Kühlring 1 mit vernachlässigbarer Turbulenz in Richtung der Pfeile 9 ab, wobei von der tragflächenförmigen Unterseite die unter Unterdruck befindliche Luft 10 wirbelfrei in die Strömungsrichtung umgelenkt wird und als Luftstrahl 11 in Richtung 9 der Kühlluft strömt und diese unterstützt. Im Bereich des abströmseitigen Endes ist die Unterseite 12 des Kühlringes 1 bogenförmig gekrümmt, wobei die bogenförmig gekrümmte Unterseite 12 mit der abströmseitigen Kante der Luftleitfläche 3 eine ringschneidenförmige Kante 13 bildet.

Der vorflügelartige Ring 4 ist flanschförmig auf das rohrförmige Teil 14 aufgesetzt, das in der aus Fig. 1 ersichtlichen Weise in den Kühlring 1 in der Weise eingeschoben ist, daß zwischen dem inneren Mantel des Kühlrings 1 und dem äußeren Mantel des Rohrstücks 14 ein Ringraum gebildet ist. Vor dem vorderen Ende ist der Kühlring 1 mit einem nach innen gerichteten ringförmigen Bund 15 in der Weise versehen, daß zwischen dem rohrförmigen Teil 14 und dem Ringbund 15 ein Überströmspalt 16 verbleibt. An das rohrförmige Teil 14 sowie den ringförmigen Bund 15 sind in der dargestellten Weise die Kühlluftzuführungsrohre 17, 18 angeschlossen.

Aus Fig. 2 ist die etagenartige Anordnung der Kühlringe ersichtlich, wobei die Kühlringe der Innenseite versetzt zu den Kühlringen der Außenseite angeordnet sind.

Der erste Kühlring folgt auf der Folieninnenseite direkt auf den Innenring 19 der Extrusionsdüse. Der Ausströmspalt ist dabei zwischen dem Kühlring und der hochgezogenen Lippe des Innenrings der Extrusionsdüse gebildet. Von dem bis auf den Austrittsspalt geschlossenen Ringraum 20 des ersten Kühlrings wird die Kühlluft über die Rohre 17 in den Ringraum 20 des zweiten Innenkühlringes geleitet, aus dem ein weiterer Teil der Kühlluft sodann aus dem anhand der Fig. 1 beschriebenen Spalt 5 austritt. Von dem Ringraum 20 des zweiten Kühlringes gelangt die Luft sodann über die weiterleitenden Rohre 17 in den Ringraum des letzten Kühlringes, aus dem die Kühlluft sodann in der beschriebenen Weise austritt. Zwischen den Rohren 17 sind Spalte und zwischen den dem ersten Kühlring folgenden Kühlringen und dem zentralen Rohr 21 sind Ringspalte vorhanden, so daß die jeweils von den Kühlleitflächen abströmende Kühlluft in die Folienblase strömen kann. Die verbrauchte Kühlluft tritt sodann in Richtung des Pfeils 22 in das zentrale Rohr 21 ein, durch das sie in bekannter Weise in Richtung des Pfeils 23 abgesaugt wird.

Die frische Kühlluft wird den Innenkühlringen in Richtung des Pfeils 24 durch den das zentrale Rohr 21 umgebenden Ringraum zugeführt.

Auf der Folienaußenseite sind in der dargestellten Weise ebenfalls Kühlringe angeordnet. Diesen Kühlringen wird die Kühlluft über die Rohre 25 und die Ringleitung 26 zugeführt, die an den Stützstangen 27 befestigt ist, die sich über Fußstücke 28 auf dem Außenring 29 der Düse 30 abstützen.

Die Ringleitung 26 mündet über einen Ringspalt in den ringförmigen Innenraum 31 des obersten Außenkühlrings. Dieser Ringraum ist über Leitungen 18 mit den darunterliegenden Kühlringen verbunden. Die einzelnen Außenkühlringe weisen die anhand der Fig. 1 beschriebene Ausgestaltung auf, wobei sie mit einem aus Fig. 1 nicht ersichtlichen geschlossenen inneren Ringraum zur Verteilung der ausströmenden Kühlluft versehen sind.

Die etagenförmig auf der Folieninnenseite und der Folienaußenseite angeordneten Kühlringe sind relativ zueinander um eine halbe Höhenteilung gegeneinander versetzt, wobei der unterste Außenkühlring gegenüber dem Außenring 29 der Düse den Abstand A einer halben Teilung B aufweist. Durch diese versetzte Anordnung ist die Düse 30 gut zur Reinigung zugänglich. Die Außenkühlringe werden durch den Stützring 28 auf dem Außenring 29 festgelegt und zentriert. Die etagenförmig angeordneten Kühlringe können nur auf der Blasfolienaußenseite, nur auf der Blasfolieninnenseite oder aber auch auf beiden Seiten, wie anhand der Fig. 2 dargestellt, angeordnet sein. Die stärkste Kühlung wird jedoch bei der Anordnung nach Fig. 2 erreicht, wobei sich die Schlauchfolie in etwa mäanderförmig auf den aufeinanderfolgenden Innen- und Außenkühlringen abstützt bzw. von diesen angesaugt wird, so daß trotz einer gewissen freien Strahllänge durch die wechselseitige Abstützung ein sehr ruhiger Schlauchfolienverlauf bei gleichzeitiger intensiver Kühlung erreicht wird.

Die Kunststoffschmelze wird von einem nicht dargestellten Extruder durch die Düse 30 ausgeformt und die dadurch gebildete Schlauchfolie 2 behält etwa über die Höhe der etagenförmig angeordneten Kühlringe einen gleichen Durchmesser bei. Durch die Kühlringe muß die Blasfolie so weit herabgekühlt werden, daß sie nach Verlassen des oberen Kühlringes gerade noch den gewünschten Schlauchdurchmesser 32 erreicht und sodann erstarrt. Die Übergangszone 33 ergibt infolge der herabgesetzten Schmelzetemperatur eine Steigerung der Folienfestigkeit, da bei bekannten Blasfolienanlagen infolge des relativ zu hohen Innendrucks in der Blasfolie spontan eine Reckung aus der Schmelze ohne spürbare Festigkeitssteigerung erfolgt.

Der geringste Kühleffekt wird durch eine Etageninnenkühlvorrichtung erreicht, die durch einen auf der Außenseite auf dem Außenring 29 aufliegenden üblichen Außenkühlring unterstützt werden muß.

Eine Kühlleistungssteigerung mit gleichzeitiger Festigkeitssteigerung wird durch die auf der Folienaußenseite etagenförmig angeordneten Kühlringe erreicht, weil durch die Außenabstützung ein höherer Blasdruck für das Aufweiten der Schlauchfolie als sonst üblich erreicht werden kann.

Zum Anfahren der Anlage können die Außenkühlringe mit ihren Stützstangen 27 und ihrem Stützring 28 hochgeschoben werden, wodurch das Durchziehen des Schlauchanfangs erleichtert ist. Nach dem Durchziehen werden die Außenkühlringe wieder in ihre Betriebsstellung abgesenkt.

In den Fig. 3 und 4 ist eine Gußausführung der Innen- und Außenkühlringe dargestellt. Die einzelnen Teile werden gegossen und können nach entsprechender Bearbeitung in der dargestellten Weise durch Aufeinandersetzen zusammengefügt werden.

Die Verbindungsrohre 17, 18 sind unter Berücksichtigung der sich verkleinernden Sektoren etwa spiegelbildlich zu der Wandung der extrudierten Schlauchfolie 2 angeordnet. Die sektorbogenförmigen Verbindungsrohre 17, 18 bilden zwischen jeweils benachbarten Rohren Ausströmspalte, durch die die erwärmte Luft ins Freie bzw. in die Folienblase abströmen kann.

Bei der Gußgestaltung der Verbindungsrohre können die Abströmkanten 13 besonders vorteilhaft ausgestaltet werden, so daß die rückströmende Kühlluft ohne störende Verwirbelung sich mit der von den Luftleitflächen abströmenden Kühlluft vereinigen kann.

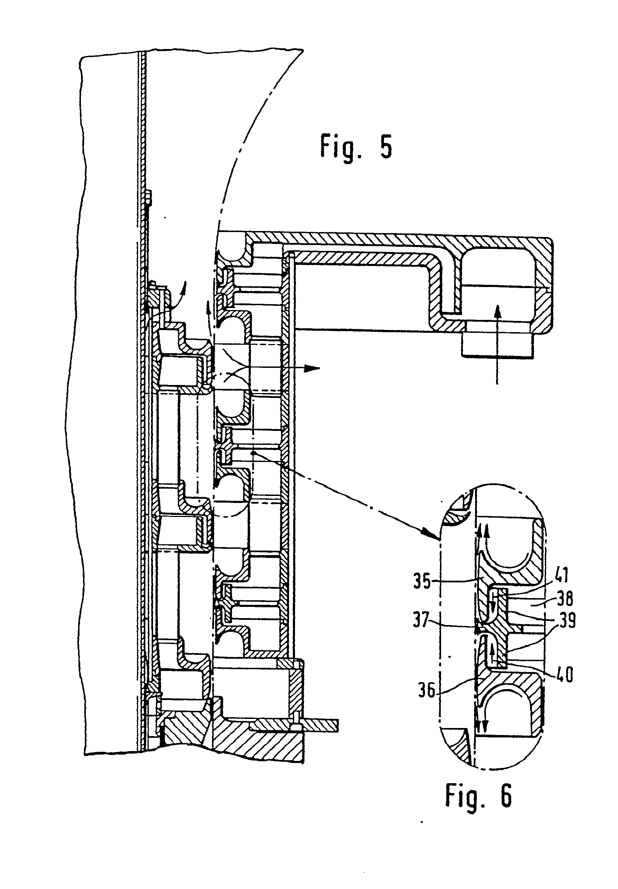

Das Ausführungsbeispiel nach Fig. 5 unterscheidet sich von dem nach den Fig. 2 und 3 im wesentlichen dadurch, daß jeweils zwei konvex oder tragflügelförmig gekrümmte Kühlringe 35, 36 spiegelbildlich zueinander angeordnet sind und aus dem zwischen diesen gebildeten radialen Spalt mit Kühlluft angeblasen werden. In dem Spalt zwischen den Kühlringen 35, 36 ist ein umlaufender Ring 37 mit T-förmigem Querschnitt in der Weise angeordnet, daß der den Quersteg dieses profilierten Ringes bildende Ring von der Schlauchfolie her gesehen die einander zugewandten Rän-. der der Kühlringe 35, 36 überlappt. Die Bereiche zwischen dem Quersteg und dem in dem Spalt liegenden radialen Mittelsteg sind abgerundet, so daß Wandungen gebildet sind, die sich mit den angeströmten Vorderkanten der Kühlringe zu spitzwinkelig gegen die Schlauchfolie gerichteten ringförmigen Düsenspalten ergänzen. In der ringförmigen Kühlluftzuführungskammer 38 ist der radiale Mittelsteg des Profils 37 in seinem Endbereich mit einem diesen beidseits überragenden axialen Ring 39 versehen, so daß zwischen den durch den Mittelsteg getrennten Ringteilen und den Rückseiten der Kühlringe 35, 36 axiale Zuströmkanäle 40, 41 für die Kühlluft gebildet sind.

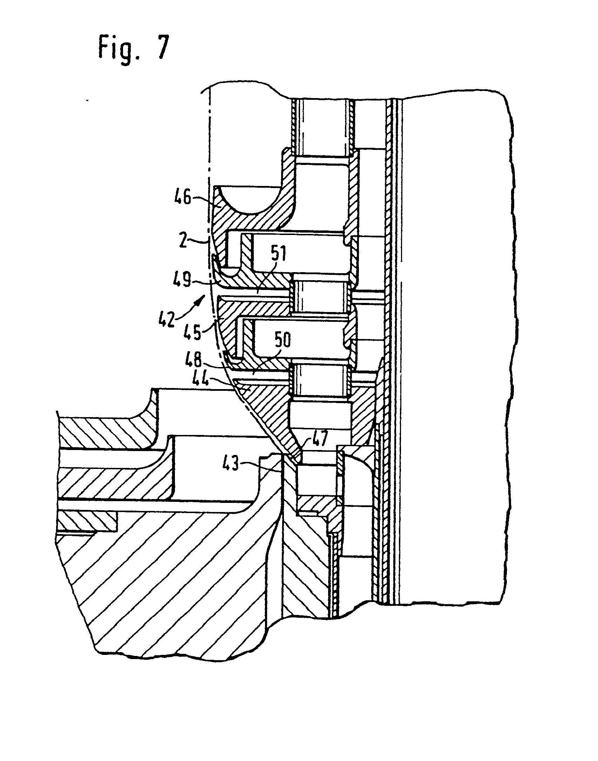

Der in Fig. 7 dargestellte etwa kegelförmige oder parabolische Aufweitungskörper 42 dient der Stabilisierung des Schlauchfolienhalses unmittelbar nach der Extrusion des Folienschlauches 2 aus der Extrusionsringdüse 43. Der Aufweitungskörper 42 ist aus Kühlringen 44, 45, 46 mit etwar tragflügelförmigen Mantellinien augebaut. Det unterste Kühlring 44 wird mit Kühlluft durch den ringförmigen Düsenspalt 47 angeblasen. Die nachfolgenden Kühlringe 45, 46 sind mit vorflügelförmigen Ringen 48, 49 versehen, die mit den Kühlringen 45, 46 spitzwinkelig gegen die Schlauchfolie 2 gerichtete Düsenspalte begrenzen. Zwischen den Kühlringen und den vorflügelförmigen Ringen sind radiale Spalte 50, 51 zur Abführung der Kühlluft vorgesehen.

## Patentansprüche

1. Kühlvorrichtung für aus einem Folienblaskopf extrudierte Kunststoffschlauchfolien mit Luftkühlung, bestehend aus im Abstand voneinander in Extrusionsrichtung hinter der Extrusionsringdüse des Folienblaskopfes im wesentlichen konzentrisch zur Achse des extrudierten Folienschlauches angeordneten Kühlringen (1) mit der Schlauchwandung zugewandten Luftleitflächen (13), über die bei Betrieb der Vorrichtung aus ringförmigen Düsenspalten (5) ausgeblasene Kühlluft streicht, dadurch gekennzeichnet, daß die Luftleitflächen (3) im Längsschnitt der Kühlringe (1) konvex gekrümmt sind und die Form der Saugseiten von Flugzeugtragflächen besitzen und daß in Strömungsrichtung der Kühlluft vor den Kühlringen (1) vorflügelförmig ausgebildete Ringe (4), die zusammen mit den Kühlringen (1) die Düsenspalten (5) bilden, derart angeordnet sind, daß bei Betrieb der Vorrichtung die Strömung der aus den Düsenspalten (5) ausgeblasenen Kühlluft etwa parallel oder spitzwinkelig zu Laufrichtung der Schlauchfolienwandung gerichtet ist.

2. Kühlvorrichtung nach Anspruch 1 oder 2, dadurch gekennzeichnet, daß die Rückseiten (12) der Kühlringe (1) im Abströmbereich etwa dem Abströmwirbel entsprechend bogenförmig ausgebildet sind und mit den Hinterkanten der Luftleitflächen (3) scharfkantige oder abgerundete Ringschneiden (13) bilden.

3. Kühlvorrichtung nach einem der Ansprüche 1 bis 3, dadurch gekennzeichnet, daß die Kühlringe (1) durch im wesentlichen axial verlaufende Kühlluftzuführungsrohre (17, 18) miteinander verbunden sind, die mit in die Spalte zwischen den Ringen (4) bzw. vorflügelförmigen Ringen (4) und den Kühlringen (1) mündenden Offnungen versehen sind.

4. Kühlvorrichtung nach einem der Ansprüche 1 bis 4, dadurch gekennzeichnet, daß die Kühlringe (1) mit den die ringförmigen Düsenspalte (5) bildenden Ringen (4) etagenförmig auf der Innen- und/oder Außenseite der Schlauchfolie (2) angeordnet, sind.

5. Kühlvorrichtung nach einem der Ansprüche 1 bis 4, dadurch gekennzeichnet, daß die Kühlringe (1) mit den die Düsenspalte (5) bildenden Ringen (4) der Innenseite um etwa die Hälfte des Abstandes der Kühlringe (1) einer Seite versetzt zu den Kühlringen (1) der Außenseite angeordnet sind.

6. Kühlvorrichtung nach einem der Ansprüche 1 bis 6, dadurch gekennzeichnet, daß der Abstand der Kühlringe (1) jeder Seite voneinander etwa dem Zwei- bis Dreifachen ihrer axialen Länge entspricht.

7. Kühlvorrichtung nach einem der Ansprüche 1 bis 7, dadurch gekennzeichnet, daß die in einer Halterung (26, 27, 28) angeordneten Kühlringe (1) und Ringe (4) der Außenseite anhebbar ausgebildet sind.

8. Kühlvorrichtung nach einem der Ansprüche 1 bis 8, dadurch gekennzeichnet, daß die Kühlringe (1) mit den die Düsenspalte (5) bildenden Ringen (4) und axialen Kühlluftzuführungsstutzen aus aufeinandersetzbaren, zusammenfügbaren Gußteilen bestehen.

# 0 121 158

9. Kühlvorrichtung nach einem der Ansprüche 1 bis 9, dadurch gekennzeichnet, daß jeweils zwei konvex oder tragflügelförmig gekrümmte Kühlringe (35, 36) spiegelbildlich zu einer radialen Ebene angeordnet sind und daß sich in dem radialen Spalt zwischen den Kühlringen (35, 36) die die Kühlringe bzw. die Schlauchfolie mit Kühlluft anblasenden Düsenspalte begrenzenden Wandungsteile befinden.

10. Kühlvorrichtung nach Anspruch 10, dadurch gekennzeichnet, daß die mit den Kühlringen (35, 36) die Düsenspalte begrenzenden Wandungsteile aus einem im Querschnitt etwa T-förmigen Ring (37) bestehen, dessen durch den Quersteg gebildeter Ring von der Schlauchfolie (2) her gesehen die einander zugewandten Ränder der paarweise angeordneten Kühlringe (35, 36) überlappt und dessen radialer Steg den radialen Spalt zwischen den Kühlringen (35, 36) mittig durchsetzt und daß der Übergang zwischen den rechtwinkelig aufeinanderstehenden Stegteilen abgerundet ist.

11. Kühlvorrichtung nach Anspruch 10 oder 11, dadurch gekennzeichnet, daß die paarweise spiegelbildlich zueinander angeordneten Kühlringe (35, 36) nur auf der Außenseite der Schlauchfolie (2) angeordnet sind.

12. Kühlvorrichtung nach einem der Ansprüche 1 bis 12, dadurch gekennzeichnet, daß zwischen der Extrusionsringdüse (43) und dem ersten Kühlring ein kegeliger Aufweitungskörper (42) angeordnet ist, an dessen unterem Ende ein ringförmiger Düsenspalt (47) zum Zuführen von Schmierluft vorgesehen ist.

13. Kühlvorrichtung nach Anspruch 13, dadurch gekennzeichnet, daß der Aufweitungskörper etwa tragflügelförmige Mantellinien aufweist.

14. Kühlvorrichtung nach Anspruch 13 oder 14, dadurch gekennzeichnet, daß der Aufweitungskörper (42) in kegelige oder parabolische Kühlringe (44, 45, 46) mit etwa tragflügelförmigen Mantellinien unterteilt ist, die über Düsenspalte bildende vorflügelförmige Ringe (48, 49) mit Kühlluft angeblasen werden.

## Claims

1. Cooling apparatus for an air-cooling of plastic tubular films which have been extruded from a film-blowing head, consisting of cooling rings (1), which are constantially concentric to the axis of the extruded tubular film and succeed the annular extrusion die of the film-blowing head and are spaced apart in the direction of extrusion, which cooling rings have air-guiding surfaces (3) which are contacted by the cooling air that is blown out of annular nozzle gaps (5) during the operation of the apparatus, characterized in that the air-guiding surfaces (3) are convexly curved in a longitudinal sectional view of the cooling rings (1) and have the shape of the suction sides of airfoils of aircraft and that slat-shaped rings (4) precede the cooling rings (1) in the direction of flow of the cooling air and together with the cooling rings (1) define the nozzle gaps (5) and are so arranged that during the operation of the apparatus the direction of flow of the cooling air blown out of the nozzle gaps (5) is approximately at right angles or at an acute angle to the direction of travel of the wall of the tubular film.

2. Cooling apparatus according to claim 1, characterized in that the rear sides (12) of the cooling rings have an arcuate trailing portion which approximately conforms to the trailing vortex and define sharp-edged or rounded annular knife edges (13) with the trailing edges of the airguiding surfaces (3).

3. Cooling apparatus according to claim 1 or 2, characterized in that the cooling rings (1) are interconnected by substantially axially extending cooling air supply pipes (17, 18), which have openings leading into the gaps between the rings (4) or slatlike rings (4) and the cooling rings (1).

4. Cooling apparatus according to any of claims 1 to 3, characterized in that the cooling rings (1) and the rings (4) which define the annular nozzle gaps (5) are arranged on a plurality of levels on the inside and/or outside of the tubular film.

5. Cooling apparatus according to any of claims 1 to 4, characterized in that those cooling rings (1) and rings (4) which define the nozzle gaps (5) which are disposed on the inside are offset from the cooling rings (1) disposed on the outside by about one-half of the spacing of the cooling rings (1) on one side.

6. Cooling apparatus according to any of claims 1 to 5, characterized in that the spacing of the cooling rings (1) on each side is about twice to three times their axial length.

7. Cooling apparatus according to any of claims 1 to 6, characterized in that the cooling rings (1) and rings (4) disposed on the outside are mounted in a holder (26, 27, 28) and adapted to be lifted.

8. Cooling apparatus according to any of claims 1 to 7, characterized in that the cooling rings (1), the rings (4) which define the nozzle gaps (5) and axial tubular ports for supplying cooling air consist of castings, which are adapted to be placed one on the other and to be assembled.

9. Cooling apparatus according to any of claims 1 to 8, characterized in that cooling rings (35, 36) are curved convexly or like an airfoil and arranged in pairs in mirror symmetry with respect to a radial plane, and those wall portions which define the nozzle gaps for blowing cooling air against the cooling rings and/or the tubular foil are disposed in the radial gap between the cooling rings (35, 36).

10. Cooling apparatus according to claim 9, characterized in that the wall portions which together with the cooling rings (35, 36) define the nozzle gaps consist of a ring (37), which is approximately T-shaped in cross-section and has an annular crosspiece which when viewed from the tubular film (2) overlaps the confronting rims of the pair of cooling rings (35, 36) and a radial annular portion which extends centrally through the radial gap between the cooling rings (35, 36), and a rounded transition is provided between the annular portions extending at right angles to each other.

11. Cooling apparatus according to claim 9 or 10, characterized in that the cooling rings (35, 36) of each pair, which are arranged in mirror symmetry, are provided only on the outside of the tubular film (2).

12. Cooling apparatus according to any of claims 1 to 11, characterized in that a conical expanding body (42) is disposed between the annular extrusion die (43) and the first cooling ring and an annular nozzle gap (47) for a supply of lubricating air is provided at the lower end of said expanding body (42).

13. Cooling apparatus according to claim 12, characterized in that the expanding body has approximately airfoil-shaped generatrices.

14. Cooling apparatus according to claim 12 or 13, characterized in that the expanding body (42) is divided into conical or parabolic cooling rings (44, 45, 46), which have approximately airfoil-shaped generatrices and are contacted by cooling air flowing over slat-shaped rings (48, 49), which define nozzle gaps.

**Revendications**

1. Dispositif de refroidissement pour le refroidissement à l'air de feuilles de tuyau en matière plastique qui ont été extrudées à partir d'une tête de soufflage de feuilles, consistant en anneaux de refroidissement (1) qui sont essentiellement concentriques par rapport à l'axe des feuilles de tuyau extrudées et se trouvent en aval de la filière annulaire d'extrusion de la tête de soufflage des feuilles et sont espacés en direction de l'extrusion, lesdits anneaux de refroidissement ayant des surfaces de guidage d'air (3) sur lesquelles passe l'air de refroidissement qui est soufflé hors de fentes de filière annulaires (5) pendant le functionnement du dispositif,
caractérisé en ce que
les surfaces de guidage d'air (3) ont une courbure convexe dans la coupe longitudinale des anneaux de refroidissement et possèdent la forme du côté succion d'ailes d'avion et que des anneaux en forme de becs d'aile (4) précèdent les anneaux de refroidissement (1) dans la direction du flux de l'air de refroidissement et définissent avec les anneaux de refroidissement (1) les fentes de filière (5) et sont disposés de manière à ce que pendant le fonctionnement du dispositif la direction du flux de l'air de refroidissement soufflé hors des fentes de filière (5) est approximativement à angle droit ou à un angle aigu par rapport à la direction d'avancement des feuilles de tuyau.

2. Dispositif de refroidissement selon la revendication 1, caractérisé en ce que les côtés arrière (12) des anneaux de refroidissement (1) ont un bord de fuite arqué qui correspond approximativement au tourbillon de bord de fuite et forment avec les arêtes arrière des surfaces de guidage d'air (3) des bords coupants annulaires (13) tranchants ou arrondis.

3. Dispositif de refroidissement selon la revendication 1 ou 2, caractérisé en ce que les anneaux de refroidissement (1) sont liés entre eux par des tuyaux d'amenée d'air de refroidissement (17, 18) qui sont disposés essentiellement dans le sens axial et ont des ouvertures débouchant dans la fente entre les anneaux (4) ou les anneaux en forme de bec d'aile (4) et les anneaux de refroidissement (1).

4. Dispositif de refroidissement selon l'une des revendications 1 à 3, caractérisé en ce que les anneaux de refroidissement (1) et les anneaux (4) qui définissent les fentes de filière annulaires (5) sont disposés en étages du côté intérieur et/ou extérieur des feuilles de tuyau (2).

5. Dispositif de refroidissement selon l'une des revendications 1 à 4, caractérisé en ce que les anneaux de refroidissement (1) et les anneaux (4) qui définissent les fentes de filière (5) et sont disposés à l'intérieur sont décalés par rapport aux anneaux de refroidissement (1) disposés à l'extérieur à peu près de la moitié de l'espacement des anneaux de refroidissement (1) d'un côté.

6. Dispositif de refroidissement selon l'une des revendications 1 à 5 caractérisé en ce que l'espacement des anneaux de refroidissement (1) de chaque côté est à peu près du double ou du triple de leur longueur axiale.

7. Dispositif de refroidissement selon l'une des revendications 1 à 6 caractérisé en ce que les anneaux de refroidissement (1) et les anneaux (4) disposés à l'extérieur sont montés dans une fixation (26, 27, 28) et sont adaptés pour être relevés.

8. Dispositif de refroidissement selon l'une des revendications 1 à 7 caractérisé en ce que les anneaux de refroidissement (1) et les anneaux (4) qui définissent les fentes de filière (5) ainsi que les tubulures d'admission de l'air de refroidissement axiales sont en pièces de fonte pouvant être superposées et assemblées.

9. Dispositif de refroidissement selon l'une des revendications 1 à 8, caractérisé en ce que les anneaux de refroidissement (35, 36) ont une courbure convexe ou à la manière d'ailes d'avion et sont disposés par paires symétriques par rapport à un plan radial, et que les parties de paroi qui définissent les fentes de filière pour souffler l'air de refroidissement contre les anneaux de refroidissement et/ou les feuilles de tuyau sont disposées dans la fente radiale entre les anneaux de rèfroidissement (35, 36).

10. Dispositif de refroidissement selon la revendication 9, caractérisé en ce que les parties de paroi qui avec les anneaux de refroidissement (35, 36) définissent les fentes de filière consistent en un anneau (37) dont la coupe transversale a une forme approximativement en T et possède une pièce transversale annulaire qui lorsqu'elle est vue à partir des feuilles de tuyau (2) chevauche avec les bords se faisant face de la paire d'anneaux de refroidissement (35, 36) et en une partie radiale annulaire qui traverse au centre la fente radiale entre les anneaux de refroidissement (35, 36) et qu'une transition arrondie est prévue entre les parties annulaires posées à angle droit l'une par rapport à l'autre.

11. Dispositif de refroidissement selon la revendication 9 ou 10, caractérisé en ce que les anneaux de refroidissement (35, 36) de chaque paire disposée de manière symétrique ne se trouvent que sur le côté extérieur des feuilles de tuyau (2).

12. Dispositif de refroidissement selon l'une des revendications 1 à 11, caractérisé en ce qu'un corps d'expansion conique (42) est disposé entre la filière d'extrusion annulaire (43) et le premier anneau de refroidissement et qu'une fente de filière annulaire (47) prévue pour amener de l'air de lubrification est disposée à l'extrémité inférieure dudit corps d'expansion (42).

13. Dispositif de refroidissement selon la revendication 12 caractérisé en ce que le corps d'expansion a des génératrices approximativement de la forme d'une aile d'avion.

14. Dispositif de refroidissement selon la revendication 12 ou 13, caractérisé en ce que le corps d'expansion (42) est subdivisé en anneaux de refroidissement coniques ou paraboliques (44, 45, 46) qui ont des génératrices approximativement de la forme d'une aile d'avion et se trouvent en contact avec l'air de refroidissement passant au-dessus des anneaux en forme de becs d'aile (48, 49) qui definissent les fentes de filière.

Fig. 3

21 33 9
10,11 31
26
25
27
18
17
11
2
28

Fig. 4

2
13
17
18
21

Fig. 5

Fig. 6

35
37
36
41
38
39
40

Fig. 7